# EUROPÄISCHE PATENTANMELDUNG

(11) **EP 3 815 528 A1**
(43) Veröffentlichungstag der Anmeldung: **05.05.2021**
(21) Anmeldenummer: 20199543.8
(22) Anmeldetag: 01.10.2020
(51) Int. Cl.: A01M 7/00

(54) **LANDMASCHINE MIT SYSTEM ZUR BERECHNUNG EINES GELÄNDERELIEF UND VERFAHREN ZUM BETREIBEN EINER LANDMASCHINE**

(30) Priorität: 29.10.2019 DE 102019129205
(71) Anmelder: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(57) **Zusammenfassung**

Die Erfindung betrifft eine Landmaschine (10), insbesondere selbstfahrende und/oder gezogene Landmaschine (10). Um eine proaktive Steuerung zu erreichen ist zumindest vorgesehen, ein, Komponenten der Landmaschine (10) tragendes Chassis (12), eine Datenverarbeitungseinrichtung (30), eine Sensoreinheit zur Erfassung eines Neigungswinkels des Chassis (12) gegenüber einer Referenzebene, eine Erfassungseinrichtung zur Erfassung einer Fahrgeschwindigkeit und/oder einer zurückgelegten Wegstrecke pro Zeit, wobei die Datenverarbeitungseinrichtung (30) ausgebildet ist, anhand einer Fahrgeschwindigkeit eine zurückgelegte Wegstrecke pro Zeit zu berechnen und/oder anhand einer zurückgelegten Wegstrecke pro Zeit und anhand eines, sich insbesondere entlang der Wegstrecke verändernden oder gleichbleibenden, Neigungswinkel des Chassis (12) ein Geländerelief (150) zu berechnen.

## Beschreibung

Die Erfindung betrifft eine Landmaschine, insbesondere eine selbstfahrende und/oder gezogene Landmaschine. Die Erfindung betrifft zudem ein Verfahren zum Betreiben einer Landmaschine, insbesondere ein Verfahren für eine selbstfahrende und/oder gezogene Landmaschine.

Eine derartige Landmaschine geht bspw. aus der EP 2 559 332 A1 bereits hervor. Die Landmaschine ist als Feldspritze ausgeführt und umfasst ein Verteilgestänge, insbesondere ein Spritzgestänge, einen, sich mit einem Fahrwerk auf dem Boden abstützenden, Rahmen und zumindest einen Vorratsbehälter. Das Verteilergestänge ist mittels einer Aufhängungsvorrichtung zumindest um eine in Fahrtrichtung verlaufende Schwenkachse schwenkbar und mittels einer Höhenverstelleinrichtung höhenverstellbar am Rahmen aufgehängt, wobei das Verteilergestänge eine Erstreckung quer zur Fahrtrichtung aufweist, die einem vielfachen der Transportbreite der Verteilmaschine entspricht, wobei die Aufhängungsvorrichtung zumindest ein zwischen dem Verteilergestänge und dem Rahmen angeordnetes Dämpfungselement und/oder zumindest einem Aktor zur Beeinflussung der Drehlage des Verteilergestänges aufweist, welches Dämpfungselement und/oder welcher Aktor von einer elektronischen Regeleinrichtung entsprechend eines von in einem Speicher einer Regeleinrichtung hinterlegten Steuerungs- und/oder Auswerteprogramms, dem Daten zumindest eines Betriebsdaten der Verteilmaschine ermittelnden Sensors zugeführt werden, ansteuerbar ist.

Um auf einfache Weise Daten ermitteln zu können, um bei Kurvenfahrt oder beim Wendevorgang ein nachteiliges Auslenken des Verteilergestänges zu vermeiden ist gemäß dem Stand der Technik vorgesehen, dass der Betriebsdaten ermittelnde Sensor als Drehratensensor ausgebildet ist, sowie dass auf der Grundlage der von dem Drehratensensor ermittelten Messdaten das Dämpfungselement und/oder der Aktor zur Beeinflussung der Drehlage des Verteilergestänges ansteuerbar und/oder einstellbar sind, und zwar derart, dass den bei Kurvenfahrt und/oder Wendevorgang auf das Verteilergestänge einwirkenden Kräften und Bewegungen entgegengewirkt wird.

Aus dem Stand der Technik ist es demnach bekannt, mittels eines Sensors Bewegungen eines Fahrzeuges, respektive eines Chassis eines Fahrzeuges zu ermitteln und auf Basis dieser Bewegungen eine Drehlage eines Verteilergestänge bzw. eines Spritzgestänge zu steuern.

Die aus dem Stand der Technik bekannten Systeme erfassen hierbei jedoch lediglich Zentrifugalbeschleunigungen eines Chassis, welche bspw. bei einer Kurvenfahrt auftreten können, weitere Daten werden nicht ermittelt, wodurch derartige Systeme bei unebenen landwirtschaftlichen Flächen nicht oder nur begrenzt eingesetzt werden können. Insbesondere könnten derartige Systeme auch nicht eingesetzt werden, um eine Proaktive Steuerung zu ermöglichen, da Zentrifugalbeschleunigungen immer erst gemessen werden können, wenn das Verteilgestänge bereits diesen Zentrifugalbeschleunigungen unterliegt.

Mittels dem aus dem Stand der Technik bekannten System kann zwar somit eine verbesserte Steuerung der Drehlage eines Spritzgestänge bei einer Kurvenfahrt erreicht werden, jedoch kann es insbesondere bei stark kupiertem Gelände und hohen Fahrgeschwindigkeiten mitunter vorkommen, dass der Aktor und somit das Verteilgestänge, insbesondere aufgrund von deren Massenträgheit, nicht schnell genug bewegt werden können, d.h. dass das Verteilgestänge nicht schnell genug ausgehoben oder verdreht werden kann. Wobei sich dies bei Veränderungen der gewünschten Höhenlage des Verteilgestänge gegenüber einer Bodenfläche bzw. einem Pflanzenbestand besonders stark bemerkbar macht.

Es ist somit Aufgabe der Erfindung, eine Landmaschine bereitzustellen, mit welcher Nachteile herkömmlicher Techniken vermieden werden können. Aufgabe der Erfindung ist es insbesondere, eine Landmaschine zu schaffen, mittels welcher auch bei stark kupiertem Gelände und hohen Fahrgeschwindigkeiten eine exakte Steuerung und/oder Regelung dieser ermöglicht ist, insbesondere eines Verteilgestänge der Landmaschine ermöglicht ist.

Diese Aufgabe wird gelöst durch eine Landmaschine mit den Merkmalen des unabhängigen Anspruch 1, sowie durch ein Verfahren zum Betreiben einer Landmaschine mit den Merkmalen des Verfahrensanspruch 19. Vorteilhafte Ausführungsformen und Weiterbildungen der Erfindung sind in den abhängigen Ansprüchen und der folgenden Beschreibung unter teilweiser Bezugnahme auf die Figuren offenbart.

Die Erfindung betrifft eine Landmaschine, insbesondere selbstfahrende und/oder gezogene landwirtschaftliche Maschine. Die Landmaschine weist zumindest ein, Komponenten der Landmaschine tragendes, Chassis, zumindest eine Datenverarbeitungseinrichtung, zumindest eine Sensoreinheit zur Erfassung eines Neigungswinkels des Chassis, insbesondere gegenüber einer Referenzebene, sowie zumindest eine Erfassungseinrichtung zur Erfassung einer Fahrgeschwindigkeit und/oder einer zurückgelegten Wegstrecke, insbesondere pro Zeit, auf.

Gemäß einem allgemeinen Aspekt der Erfindung ist die Datenverarbeitungseinrichtung ausgebildet, anhand einer Fahrgeschwindigkeit eine zurückgelegte Wegstrecke, insbesondere pro Zeit, zu berechnen und/oder anhand einer zurückgelegten Wegstrecke, insbesondere pro Zeit und anhand eines, sich insbesondere entlang der Wegstrecke verändernden oder gleichbleibenden, Neigungswinkels des Chassis eine Geländerelief zu berechnen.

Infolge der Erfindungsgemäßen Maßnahmen, insbesondere infolge der Erfindungsgemäßen Berechnung eines Geländereliefs wird demnach eine Landmaschine geschaffen, mittels welcher auch bei stark kupiertem Gelände und hohen Fahrgeschwindigkeiten eine exakte Steuerung und/oder Regelung dieser erreicht werden kann, vorzugsweise insbesondere eines Verteilgestänge der Landmaschine erreicht werden kann.

Insbesondere können mittels der vorliegenden Erfindung, durch Bodenunebenheiten auf zweckmäßig ein Verteilgestänge übertragene Schlagartige-, Ruckartige- und/oder dergl. Bewegungen durch eine insbesondere auf dem Geländerelief basierenden Proaktiven Steuerung- und/oder Regelung entgegen dieser Bewegungen, derartige Schlagartige-, Ruckartige- und/oder dergl. Bewegungen reduziert, d.h. insbesondere zumindest weitgehend bereits vor eintreten kompensiert werden.

Die vorliegende Erfindung beruht auf der Erkenntnis, dass anhand einer Fahrgeschwindigkeit eine zurückgelegte Wegstrecke, insbesondere pro Zeit berechnet werden kann, insbesondere mit einer Datenverarbeitungseinrichtung berechnet werden kann und/oder das mittels einer bekannten zurückgelegten Wegstrecke, insbesondere pro Zeit und anhand eines sich in Abhängigkeit von bspw. Steigungen entlang der Wegstrecke verändernden Neigungswinkel des Chassis, insbesondere gegenüber einer Referenzebene, ein Geländerelief berechnet werden kann. Wobei hierfür entsprechend eines sich verändernden und/oder eines gleichbleibenden Neigungswinkels in Bezug auf eine Referenzebene entlang einer Wegstrecke, entsprechende Steigungen, Gefälle, Krümmungen, Neigungen und/oder Geraden berechnet werden können, welche Steigungen, Gefälle, Krümmungen, Neigungen und/oder Geraden aneinander gereiht ein Geländerelief definieren können. Wobei Steigungen, Gefälle, Krümmungen, Neigungen und/oder Geraden im Kontext der Erfindung auch jeweils einzeln eine Geländerelief definieren können.

Im Kontext der Erfindung entspricht das Geländerelief zweckmäßig insbesondere einem Querschnitt (z.B. auch Verlauf der Oberfläche) einer Bodenfläche (z.B. Oberfläche) einer landwirtschaftlichen Fläche, insbesondere einem kontinuierlichen und/oder abschnittweisen Querschnitt der landwirtschaftlichen Fläche, insbesondere Bodenfläche. Wobei das Geländerelief zudem kontinuierlich und/oder abschnittweise in Fahrtrichtung berechnet werden kann, alternativ oder ergänzend auch quer zur Fahrtrichtung der Landmaschine berechnet werden kann, alternativ oder ergänzend auch dreidimensional, d.h. in Fahrtrichtung und quer zur Fahrtrichtung berechnet werden kann.

Auf Basis des Geländerelief können erfindungsgemäß insbesondere Stellsignale (z.B. Steuerungs- und/oder Regelungssignale) frühzeitig, vorzugsweise proaktiv an Stelleinrichtungen der Landmaschine übertragen werden, wodurch Stellbewegungen (z.B. Steuerungs- und/oder Regelungsbefehlt) frühzeitig, insbesondere bereits vor eintreten eines Ereignisses eingeleitet werden können. Wobei anhand der Bewegungen eines Chassis und dem daraus berechneten Geländerelief erfindungsgemäß, insbesondere mittels der Datenverarbeitungseinrichtung, Bewegungen von Komponenten der Landmaschine, insbesondere eines Verteilgestänge vorab (z.B. proaktiv) berechnet werden können. D.h., erfindungsgemäß kann erreicht werden, dass Anhand des Geländerelief entsprechende Positionsänderungen (z.B. der Höhenlage) der Komponenten der Landmaschine (z.B. eines Verteilgestänge), berechnet werden können. Ist bspw. das Verteilgestänge in einem hinteren Bereich der Landmaschine angeordnet und ändert sich die Neigung der Chassis, kann proaktiv ein Aktuator zur Lageänderung (z.B. Höhenlage und/oder Drehlage) des Verteilgestänge angesteuert werden, wodurch jeweils frühzeitig auf sich ändernde Geländereliefs reagiert werden kann und insbesondere ein Abstand (z.B. Mindestabstand) eines Verteilgestänge gegenüber der Bodenfläche eingehalten werden kann.

Im Kontext der Erfindung umfasst die Sensoreinheit zweckmäßig insbesondere die Gesamtheit aller Sensoranordnungen.

Die Landmaschine umfasst ein, Komponenten der Landmaschine tragendes, Chassis. Wobei das Chassis insbesondere durch das Fahrgestell und/oder den Rahmen der Landmaschine gebildet wird und/oder ein Fahrgestell und/oder den Rahmen der Landmaschine umfasst. Insbesondere bildet das Chassis einen tragenden Teil der Landmaschine an welchem bspw. als Komponenten das Fahrgestell und dessen Radaufhängungen angebracht sind. Aber auch bspw. ein Vorratsbehälter, Antriebe, Getriebe und/oder dergl. angebaut sein können. Das Chassis kann einteilig oder mehrteilig sein und durch unlösbare und/oder lösbare Verbindungen zusammengesetzt sein.

Gemäß einer Ausführungsvariante ist es möglich, dass die Sensoreinheit eine erste Sensoranordnung zur Erfassung eines Neigungswinkels in Fahrtrichtung, insbesondere gegenüber der Referenzebene, aufweist. Zweckmäßig kann die erste Sensoranordnung ausgebildet sein, einen sich entlang der Wegstrecke in Fahrtrichtung verändernden oder gleichbleibenden Neigungswinkel des Chassis zu erfassen.

Gemäß einer alternativen oder ergänzenden Ausführungsvariante ist es möglich, dass die Sensoreinheit eine zweite Sensoranordnung zur Erfassung eines Neigungswinkels quer zur Fahrtrichtung, insbesondere gegenüber der Referenzebene aufweist. Zweckmäßig kann die zweite Sensoranordnung ausgebildet sein, einen sich entlang der Wegstrecke quer zur Fahrtrichtung verändernden oder gleichbleibenden Neigungswinkel des Chassis zu erfassen.

Die Erfindung kann vorsehen, dass die erste Sensoranordnung und/oder die zweite Sensoranordnung zur Bestimmung eines Neigungswinkels (z.B. Neigungswinkel in Fahrtrichtung und/oder Neigungswinkel quer zur Fahrtrichtung) des Chassis, insbesondere gegenüber der Referenzebene zumindest einen Neigungswinkelsensor umfasst. Wobei der Neigungswinkelsensor insbesondere am Chassis angebaut ist oder derartig mit dem Chassis gekoppelt ist um Bewegungen (z.B. verändernde und/oder gleichbleibende Neigungen) dieses zu erfassen.

Der Neigungswinkelsensor kann insbesondere als ein Beschleunigungskompensierter Neigungswinkelsensor ausgeführt sein, wodurch insbesondere Querbeschleunigungen des Chassis, welche bspw. durch Bodenunebenheiten hervorgerufen werden, keine Auswirkungen auf eine exakte Ausgabe bzw. Erfassung eines Neigungswinkels haben.

Der Beschleunigungskompensierte Neigungssensor kann sich bspw. aus einem Neigungssensor, insbesondere einem Neigungssensor vom Schwerkrafttyp und einem Beschleunigungen erfassenden Sensor (z.B. Drehratensensor (z.B. Gyroskop), Beschleunigungssensor und/oder dergl.) zusammen setzen. Wobei der Neigungssensor und der Beschleunigungen erfassende Sensor ein gemeinsames Gehäuse aufweisen können aber auch jeweils separate Gehäuse aufweisen können und bspw. durch die Datenverarbeitungseinrichtung gekoppelt sein können.

Als Neigungswinkelsensoren können ergänzend oder alternativ darüber hinaus auch andere Sensoren, welche ausgebildet sind, eine Neigung (z.B. Steigung) zu erfassen, eingesetzt werden. Beispiele für derartige Neigungswinkelsensoren sind u.a. Neigungswinkelmesser, Gefällemesser, Steigungsmesser, Inklinometer und/oder Klinometer.

Die Erfindung kann alternativ oder ergänzend vorsehen, dass die erste Sensoranordnung und/oder die zweite Sensoranordnung zumindest einen Drehratensensor (z.B. Gyroskop, Gierratensensor) und/oder einen Beschleunigungssensor, zur Erfassung einer Drehgeschwindigkeit und/oder einer Drehbeschleunigung des Chassis (z.B. in Fahrtrichtung und/oder quer zur Fahrtrichtung), insbesondere gegenüber der Referenzebene umfasst. Wobei der Drehratensensor insbesondere am Chassis angebaut und/oder mit diesem gekoppelt ist.

Alternativ wäre es zudem möglich, dass die erste Sensoranordnung und die zweite Sensoranordnung durch einen Drehratensensor gebildet werden. Wobei der Drehratensensor hierbei insbesondere als zumindest 2-Achs Drehratensensor oder 3-Achs Drehratensensor ausgebildet sein kann, der somit Drehgeschwindigkeiten und/oder Drehbeschleunigungen gegenüber zwei Achsen (z.B. X-Achse und/oder Y-Achse) oder drei Achsen (z.B. X-Achse und/oder Y-Achse und/oder Z-Achse) messen kann.

Erfindungsgemäß kann insbesondere vorgesehen sein, dass die Datenverarbeitungsrichtung ausgebildet ist, durch zeitliche Integration der Drehgeschwindigkeit und/oder durch zeitliche Integration der Drehbeschleunigung einen Neigungswinkel des Chassis (z.B. in Fahrtrichtung und/oder quer zur Fahrtrichtung), insbesondere gegenüber der Referenzebene, zu bestimmen, insbesondere zu berechnen. Wobei die Integration bzw. die Berechnung mittels eines, in der Datenverarbeitungseinrichtung hinterlegen Rechenprogramm erfolgen kann und/oder mittels einer einen Bestandteil der Datenverarbeitungseinrichtung bildenden Rechnereinheit erfolgen kann.

Erfindungsgemäß kann insbesondere vorgesehen sein, dass die Datenverarbeitungsrichtung ausgebildet ist, durch eine zweimalige zeitliche Integration der Drehgeschwindigkeit und/oder durch zeitliche Integration der Drehbeschleunigung einen Neigungswinkel des Chassis (z.B. in Fahrtrichtung und/oder quer zur Fahrtrichtung), gegenüber der Referenzebene zu bestimmen, insbesondere zu berechnen. Wobei die Integration bzw. die Berechnung mittels eines, in der Datenverarbeitungseinrichtung hinterlegen Rechenprogramm erfolgen kann und/oder mittels einer, einen Bestandteil der Datenverarbeitungseinrichtung bildenden, Rechnereinheit erfolgen kann.

Es sei darauf hingewiesen das erfindungsgemäß ein berechnen, auch ein erzeugen, generieren und/oder dergl. umfassen kann.

Es ist möglich, dass die Landmaschine, zweckmäßig insbesondere die Datenverarbeitungseinrichtung eine graphische Anzeigevorrichtung aufweist und/oder mit einer graphischen Anzeigevorrichtung signalverbunden und/oder signalverbindbar ist und die graphische Anzeigevorrichtung ausgebildet ist, das berechnete Geländerelief graphisch anzuzeigen. Die graphische Anzeigevorrichtung kann bspw. ein Terminal, ein Display, ein mobiles Endgerät, ein Computer und/oder dergl. sein und/oder umfassen.

Es sei angemerkt, dass die im vorliegenden definierte Fahrtrichtung insbesondere einer Längserstreckungsrichtung der Landmaschine bzw. einer Vorwärtsrichtung der Landmaschine entspricht.

Die Referenzebene weist bspw. eine Orientierung auf, welcher einer Horizontalen (z.B. mathematische Horizontale) entspricht und/oder einem künstlichen Horizont (z. B. künstliche Horizontebne, mathematischer Horizont oder dergl.) entspricht. Die künstliche Horizontebene ist insbesondere im rechten Winkel zur Lotrichtung des Chassis orientiert.

Gemäß einer alternativen oder ergänzenden Ausführungsvariante, weist die Referenzebene bspw. eine Orientierung auf, welche einer Orientierung der Erdbeschleunigung entspricht.

Die Referenzebene kann alternativ oder ergänzend zudem eine Orientierung aufweisen, welche zumindest weitgehend parallel zu einer Horizontalen ist und/oder zumindest weitgehend parallel zu einer Orientierung der Erdbeschleunigung ist.

Als Referenzebene kann in Fahrtrichtung und quer zur Fahrtrichtung jeweils die gleiche Ebene eingesetzt, d.h. herangezogen werden.

Das Chassis und/oder das dem Chassis zugeordnete Fahrgestell, kann eine oder mehrere Raufaufhängungen aufweisen, wobei insbesondere zwei derartige Radaufhängungen eine Achse ausbilden können und wobei jeder Radaufhängung zumindest ein Laufrad zugeordnet sein kann.

Erfindungsgemäß kann zweckmäßig insbesondere vorgesehen sein, dass die Landmaschine, insbesondere das Fahrgestell, mindestens eine Achse aufweist, insbesondere eine erste Achse und/oder eine zweite Achse aufweist, wobei die erste Achse (z.B. Vorderachse) und/oder die zweite Achse (z.B. Hinterachse) jeweils zwei Laufräder aufweisen kann. Die Radaufhängungen, respektive die Laufräder von zumindest einer Achse können zudem lenkbar gegenüber dem Chassis sein.

Alternativ und/oder ergänzend kann zudem vorgesehen sein, dass die Laufräder Links und Rechts vom Chassis angeordnet sind, wobei zumindest die Laufräder der ersten Achse und/oder der zweiten Achse höhenbeweglich gegenüber dem Chassis sein können. Wobei eine Höhenbeweglichkeit zweckmäßig derartig erfolgen kann, dass die Laufräder höhenverstellbar und/oder federnd gegenüber dem Chassis sind, um somit insbesondere gute Fahreigenschaften und eine gute Bodenanpassung zu erreichen. In Abhängigkeit der Höhenbeweglichkeit kann dementsprechend ein Relativabstand zwischen dem Laufrad und dem Chassis definiert werden.

Es ist möglich, dass zumindest zwei Laufräder höhenbeweglich gegenüber dem Chassis angeordnet sind und die Datenverarbeitungseinrichtung ausgebildet ist, einen Neigungswinkel und/oder ein Geländerelief unter Berücksichtigung eines Relativabstand der Laufräder gegenüber dem Chassis zu Berechnen. D.h. weisen bspw. die Laufräder einer Achse (z.B. der ersten Achse) einen geringeren Relativabstand zum Chassis auf als die Laufräder einer weiteren Achse (z.B. der zweiten Achse) oder weist bspw. zumindest ein Links neben dem Chassis angeordnetes Laufrad einen anderen Relativabstand zum Chassis auf als ein Rechts neben dem Chassis angeordnetes Laufrad, ändert sich somit auch die Neigung des Chassis gegenüber einer Referenzebene, um dies bei der Berechnung des Geländerelief mit zu berücksichtigen kann die somit geänderte Neigung mittels der Datenverarbeitungseinrichtung entsprechend mit berücksichtigt werden, insbesondere mit aufsummiert werden.

Gemäß einer Ausführungsvariante kann insbesondere vorgesehen sein, dass die Datenverarbeitungseinrichtung ausgebildet ist, einen Neigungswinkel in Fahrtrichtung α und/oder einen Neigungswinkel quer zur Fahrtrichtung β und/oder ein Geländerelief unter Berücksichtigung eines Relativabstand der Laufräder der ersten Achse gegenüber dem Chassis und eines Relativabstand der Laufräder der zweiten Achse gegenüber dem Chassis und/oder unter Berücksichtigung eines Relativabstand der Laufräder Links gegenüber dem Chassis und eines Relativabstand der Laufräder Rechts gegenüber dem Chassis, zu berechnen.

Gemäß einer weiteren Ausführungsvariante ist es möglich, dass die Spurweite (z.B. Spurbreite) der Laufräder von zumindest einer Achse verstellbar ist, vorzugsweise zweckmäßig mittels eines Stellantrieb (z.B. hydraulisch und/oder pneumatisch und/oder elektrisch betriebener Zylinder) verstellbar ist. Wobei die Datenverarbeitungseinrichtung zudem ausgebildet sein kann, einen Neigungswinkel (z.B. in Fahrtrichtung und/oder quer zur Fahrtrichtung) und/oder ein Geländerelief unter Berücksichtigung einer Spurweite der Laufräder zu berechnen.

Zur Erfassung des Relativabstand zwischen den Laufrädern und dem Chassis können Messmittel (z.B. Wegmesssysteme, Abstandsensoren und/oder dergl.) vorgesehen sein. Bspw. können die Laufräder, respektive die Radaufhängungen mit Aktoren (z.B. hydraulisch und/oder pneumatisch und/oder elektrisch betriebener Zylinder) zur höhenbeweglichkeit ausgestattet sein und bspw. Bewegungen der Aktoren mittels des Messmittel entsprechend gemessen werden. Auch eine Druck- und/oder Kraftsensorik im Aktor wäre denkbar bzw. einsetzbar. Auch eine Messung des Abstand zwischen dem Chassis und einer Bodenfläche wäre denkbar wobei wiederum anhand dieses Abstand ein Relativabstand definiert werden kann.

Ebenso können zur Erfassung der Spurbreite Messmittel vorgesehen sein. Bspw. Wegmesssysteme, Abstandssensoren und/oder dergl.

Es ist möglich, dass die Spurbreite als Parameter in der Datenverarbeitungseinrichtung hinterlegt ist, oder durch eine Bedienperson hinterlegt werden kann.

Bei der Landmaschine gemäß der vorliegenden Erfindung kann es sich bspw. um eine landwirtschaftliche Zugmaschine (z.B. Traktor) handeln. Alternativ oder ergänzend kann es sich bei der Landmaschine gemäß der vorliegenden Erfindung um eine selbstfahrende Arbeitsmaschine (z.B. Selbstfahrende Feldspritze, Selbstfahrender Düngersteuer, Selbstfahrende Erntemaschine und/oder dergl.) oder eine gezogene Arbeitsmaschine (z.B. mittels Zugfahrzeug gezogene und/oder an Zugfahrzeug angebaute Feldspritze, Düngersteuer) handeln.

Im Kontext der Erfindung kann es sich bei der Landmaschine zudem um eine einzelne Maschine handeln aber auch um einen Maschinenverbund, welcher sich bspw. aus einer Zugmaschine und einer mittels der Zugmaschine gezogenen oder an der Zugmaschine angebauten Arbeitsmaschine zusammensetzt, handeln.

Es ist zudem im Kontext der Erfindung möglich, dass zur Berechnung eines Geländerelief Neigungen (z.B. in Fahrtrichtung und/oder quer zur Fahrtrichtung) einer Zugmaschine (z.B. dessen Chassis) erfasst werden und mittels der Datenverarbeitungseinrichtung entsprechende Höhenlagen und/oder Drehlagen einer, an einer mittels der Zugmaschine gezogenen oder an der Zugmaschine angebauten Arbeitsmaschine, angebauten Komponente (z.B. Verteilgestänge) entsprechend der Neigungen des Zugfahrzeug (z.B. dessen Chassis) anhand der Fahrzeuggeometrie der mittels des Zugfahrzeug gezogenen oder an der Zugmaschine angebauten Arbeitsmaschine umgerechnet werden.

Die Landmaschine kann zudem als autonome Landmaschine, zweckmäßig bspw. vollautonom oder teilautonom, ausgebildet sein.

Zur exakten Durchführung landwirtschaftlicher Arbeiten, kann die Landmaschine gegenüber dem Chassis schwenkbar und/oder höhenverstellbar gelagerte Komponenten umfassen.

Insbesondere kann die Landmaschine ein gegenüber dem Chassis Höhenverstellbares und/oder gegenüber dem Chassis in dessen Drehlage verstellbares Verteilgestänge, insbesondere Spritzgestänge, zur vorzugsweisen Ausbildung einer Feldspritze oder eines Düngerstreuers, aufweisen.

Es sei angemerkt, dass gemäß vorliegender Erfindung unter die Definition Spritzgestänge insbesondere derartige Verteilgestänge fallen, welche sich in einer großen Arbeitsbreite quer zu einer Fahrtrichtung erstrecken können, bspw. bis zu 30 Meter oder mehr erstrecken können, und sich aus einem Mittelteil und Links und Rechts am Mittelteil und schwenkbar zu diesem angeordneten Seitenteilen zusammensetzt, welche Seitenteile, insbesondere für eine Transportfahrt, gegenüber dem Mitteilteil verschwenkt werden können. Die Spritzgestänge weisen zudem beabstandet zueinander eine Mehrzahl an Ausbringelementen (z.B. Spritzdüsen, Prallelemente), zur zweckmäßigen Verteilung eines flüssigen und/oder granularen Stoffes auf.

Gemäß alternativen Ausführungsvarianten wäre es jedoch auch denkbar, dass die Landmaschine anstelle eines Verteilgestänges mit anderen Komponenten ausgestattet ist, bspw. mit einer Erntevorrichtung ausgestattet ist, welche zudem höhenverstellbar gegenüber dem Chassis sein kann. Die Landmaschine gemäß der vorliegenden Erfindung ist zweckmäßig insbesondere zur Durchführung landwirtschaftlicher Arbeiten, Prozesse und/oder dergl. geeignet und/oder ausgebildet.

Die Landmaschine umfasst zweckmäßig insbesondere ein gegenüber dem Chassis höhenverstellbares und/oder gegenüber dem Chassis in dessen Drehlage verstellbares Verteilgestänge. Zudem umfasst die Landmaschine zur Steuerung und/oder Regelung einer Höhenlage (z.B. Abstand gegenüber einer Bodenfläche) eine erste Stelleinrichtung und/oder zur Steuerung und/oder Regelung einer Drehlage (z.B. Drehlage gegenüber einer Bodenfläche) eine zweite Stelleinrichtung.

Die erste Stelleinrichtung und/oder die zweite Stelleinrichtung können insbesondere durch einen und/oder mehrere pneumatisch und/oder hydraulisch und/oder elektrisch betätigbare und/oder betriebene Aktuator(en) (z.B. Zylinder, Motor, Stellantrieb und/oder dergl.) gebildet werden. Insbesondere können die erste Stelleinrichtung und/oder die zweite Stelleinrichtung durch einen oder mehrere einfachwirkenden und/oder durch zwei gegensinnig arbeitende einfachwirkende und/oder durch einen oder mehrere doppeltwirkenden Zylinder gebildet werden.

Es ist zweckmäßig möglich, dass die Datenverarbeitungseinrichtung ausgebildet ist, eine Höhenlage und/oder eine Drehlage des Verteilgestänge gegenüber dem Chassis und/oder gegenüber einer Bodenfläche anhand zumindest einem von folgendem zu berechnen:
- Anhand einer Fahrzeuggeometrie der Landmaschine und/oder
- Anhand einer zurückgelegten Wegstrecke und/oder
- Anhand eines berechneten Geländerelief.

Es ist möglich, dass die Datenverarbeitungseinrichtung ausgebildet ist, Stellsignale, insbesondere Steuerungs- und/oder Regelungssignale für die erste Stelleinrichtung und/oder die zweite Stelleinrichtung anhand zumindest einem von folgendem zu berechnen:
- Anhand einer Fahrzeuggeometrie der Landmaschine und/oder
- Anhand einer zurückgelegten Wegstrecke und/oder
- Anhand eines berechneten Geländerelief.

Die Fahrzeuggeometrie kann insbesondere durch eine Spurweite und/oder einen Achsabstand (Radstand) und/oder einen Referenzabstand des Verteilgestänge zu einem Referenzpunkt am Chassis und/oder einer Breite des Verteilgestänge definiert werden.

Die Fahrzeuggeometrie kann darüber hinaus auch Abmessungen einer Zugmaschine und einer an der Zugmaschine angebauten und/oder mit dieser verbundenen Arbeitsmaschine mit umfassen.

Anhand der Fahrzeuggeometrie wird jeweils eine Veränderung einer Höhenlage oder einer Drehlage des Verteilgestänges definiert, d.h. je größer bspw. der Abstand zwischen der hinteren Achse und dem Verteilgestänge ist, desto größer ist bei einer sich verändernden Neigung (z.B. in Fahrtrichtung) des Chassis auch die Veränderung der Höhenlage oder der Drehlage.

Erfindungsgemäß ist die Datenverarbeitungseinrichtung zweckmäßig insbesondere ausgebildet, Anhand eines, insbesondere auf Basis des Geländerelief berechneten, Mindestabstand des Verteilgestänge gegenüber der Bodenfläche, Stellsignale für die erste Stelleinrichtung und/oder die zweit Stelleinrichtung zu generieren. D.h. anhand einer Fahrzeuggeometrie, einer zurückgelegten Wegstrecke und/oder eines Geländerelief kann mittels der Datenverarbeitungseinrichtung definiert werden, welche Höhenlage und/oder welche Drehlage die Komponenten, insbesondere das Verteilgestänge bei der derzeitigen Einstellung der Stelleinrichtung hat, wobei die Datenverarbeitungseinrichtung zudem ausgebildet ist, insbesondere in Abhängigkeit des Geländerelief und/oder der Fahrzeuggeometrie eine Veränderung der Höhenlage oder einer Drehlage zu berechnen und evtl. ein definierter Mindestabstand zu bspw. einer Bodenfläche unterschritten oder überschritten wird. In Abhängigkeit dieses Mindestabstandes kann anschließend eine Höhenlage und/oder Drehlage entsprechend angepasst werden.

Gemäß einer Weiterbildung der Erfindung kann vorgesehen sein, dass dem Verteilgestänge zur Erfassung eines Mindestabstands, d.h. zur Erfassung einer Höhenlage des Verteilgestänge gegenüber einer Bodenfläche eine vierte Sensoranordnung zugeordnet ist, insbesondere Abstandsensoren wie bspw. Ultraschallsensoren oder dergl. Wobei zudem vorgesehen sein kann, dass eine Höhenlage des Verteilgestänge unter Berücksichtigung des Geländerelief und einer mittels der Sensoren zur Erfassung einer Höhenlage erfassten Höhenlage des Verteilgestänge erfolgt.

Um die Berechnung des Geländerelief noch weiter zu präzisieren und um eine proaktive Steuerung noch weiter zu verbessern ist es gemäß einer alternativen Ausführungsvariante denkbar, dass die Landmaschine eine dritte Sensoranordnung aufweist. Wobei die dritte Sensoranordnung zur Erfassung eines Chassisabstand zwischen dem Chassis und einer Bodenoberfläche (z.B. Geländerelief) ausgebildet ist. Die dritte Sensoranordnung kann zudem dem Chassis insbesondere vorgeordnet sein, d.h. insbesondere in einem Abstand vor dem Chassis angeordnet sein, wobei der Abstand mindestens 0,5 Meter betragen kann. Alternativ oder ergänzend kann die vierte Sensoranordnung insbesondere den Laufrädern vorgeordnet sein, d.h. im Bereich einer Fahrspur der Landmaschine angeordnet sein.

Die Dritte Sensoranordnung ist insbesondere ausgebildet, Bodenunebenheiten vorab zu erfassen, insbesondere Bodenunebenheiten (z.B. Steigungen, Neigungen, Senken, Kuppen) schon zu erfassen, bevor eine Veränderung der Neigung (z.B. in Fahrtrichtung und/oder quer zur Fahrtrichtung) des Chassis eintritt. Was sich insbesondere beim Durchfahren einer Senke oder beim Überfahren einer Kuppe entsprechend bemerkbar macht.

Die Dritte Sensoranordnung kann durch einen oder mehrere Abstandsensoren (z.B. Ultraschallsensor) gebildet werden und/oder derartige umfassen.

Die Erfassungseinrichtung kann eine sensorische Erfassung einer Fahrgeschwindigkeit umfassen oder eine positionsabhängige Erfassung einer Fahrgeschwindigkeit umfassen.

Die Erfassungseinrichtung kann zur Bestimmung einer Fahrgeschwindigkeit insbesondere Geschwindigkeitserfassende Sensoren umfassen oder durch derartige gebildet sein. Beispiele für derartige Geschwindigkeitserfassende Sensoren sind u.a. Radarsensoren, Tachometer, Drehzahlmesser, Hallsensoren und/oder dergl.

Die Erfassungseinrichtung kann alternativ und/oder ergänzend auch mit einem Positionsbestimmungssystem (z.B. GPS-System, Galileo-System) verbunden und/oder verbindbar sein und bspw. eine Geschwindigkeit anhand einer sich verändernden Position der Landmaschine ermitteln und/oder eine zurückgelegte Wegstrecke, insbesondere pro Zeit, zweckmäßig insbesondere in Abhängigkeit einer sich verändernden Position der Landmaschine, ermitteln.

Zur Erfassung einer Fahrgeschwindigkeit und/oder einer zurückgelegten Wegstrecke, insbesondere pro Zeit, kann die Erfassungseinrichtung auch eine eigene Datenverarbeitungseinrichtung aufweisen oder mit einer derartigen koppelbar sein.

Gemäß einer Ausführungsvariante kann die Erfassungseinrichtung ausgebildet sein, eine Wegstrecke pro Zeit zu berechnen.

Die Erfassungseinrichtung kann insbesondere ausgebildet sein, eine konstante Geschwindigkeit, eine Beschleunigung und/oder eine Verzögerung der Landmaschine zu erfassen. Zudem kann die Datenverarbeitungseinrichtung ausgebildet sein, anhand einer konstanten Geschwindigkeit, einer Beschleunigung und/oder einer Verzögerung eine zurückgelegte Wegstrecke pro Zeit zu berechnen.

Die Erfassungseinrichtung kann darüber hinaus aus einer Beschleunigung, einer Verzögerung sowie einer konstanten Geschwindigkeit eine Durchschnittsgeschwindigkeit berechnen welche Durchschnittsgeschwindigkeit wiederum als Basis zur Berechnung einer zurückgelegten Wegstrecke pro Zeit eingesetzt werden kann.

Es ist möglich, dass das jeweils berechnete Geländerelief an ein Planungssystem, zur Planung landwirtschaftlicher Prozesse übertragen wird und bspw. zur Planung landwirtschaftlicher Prozesse eingesetzt werden kann. Auch ist es denkbar, dass das Geländerelief an andere Landmaschine(n) übertragen wird und/oder in einem Rechnerprogramm einer anderen Landmaschine hinterlegt wird.

Die Datenverarbeitungseinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung zudem auch drahtlos (z.B. mittels WLAN) erfolgen kann.

Im Kontext der Erfindung umfasst der Begriff der Datenverarbeitungseinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Datenverarbeitungseinrichtungen.

Die Datenverarbeitungseinrichtung kann zudem ausgebildet sein, die mittels der ersten Sensoranordnung und die mittels der zweiten Sensoranordnung erfassten Neigungswinkel derartig zu verknüpfen, um ein dreidimensionales Geländerelief zu erzeugen. Wobei hierbei zudem die mittels der dritten Sensoranordnung erfassten Abstände ebenso mit einfließen können.

Die Datenverarbeitungseinrichtung kann zudem ausgebildet sein, die Daten der ersten Sensoranordnung und/oder der zweiten Sensoranordnung und/oder der dritten Sensoranordnung und/oder der vierten Sensoranordnung zu fusionieren und daraus ein Geländerelief erzeugen.

Es sei noch darauf hingewiesen, dass die Begriffe "Steuern" und "Regeln" bzw. "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Im Kontext der Erfindung kann der Referenzpunkt einer beliebigen Position, insbesondere am Chassis, entsprechen. Bspw. kann als Referenzpunkt auch ein Laufrad oder eine Achse verwendet werden. Wenn im vorliegenden von einem Referenzpunkt die Rede ist, so gilt dies beispielshaft für einen Bezugspunkt des Chassis zur Definition von Abständen, Maßen und/oder dergl.

Zur Vermeidung von Wiederholungen sollen im Zusammenhang mit der Landmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die Landmaschine gelten somit auch für das Verfahren. In umgekehrter Weise gilt das gleiche, so dass auch alle Aspekte, erfindungsgemäße Merkmale und Ausführungsvarianten die im Zusammenhang mit dem Verfahren, demnach auch für die Landmaschine offenbart und entsprechend beanspruchbar sind.

Die Erfindung umfasst zur Lösung der Aufgaben zudem ein Verfahren zum Betreiben einer Landmaschine, insbesondere für eine selbstfahrende und/oder gezogene Landmaschine.

Die Landmaschine kann insbesondere ausgeführt sein wie hierin beschrieben.

Das Verfahren umfasst ein berechnen eines Geländerelief mittels einer Datenverarbeitungseinrichtung, Anhand eines mittels einer Sensoreinheit erfassten, sich entlang einer Wegstrecke verändernden oder gleichbleibenden Neigungswinkels eines Chassis der Landmaschine, insbesondere gegenüber einer Referenzebene und Anhand einer zurückgelegten Wegstrecke.

Die Landmaschine weist gemäß einer Weiterbildung der Erfindung ein gegenüber dem Chassis in dessen Höhenlage und/oder in dessen Drehlage verstellbares Verteilgestänge auf, wobei zur Steuerung- und/oder Regelung einer Höhenlage des Verteilgestänge eine erste Stelleinrichtung vorgesehen ist und/oder wobei zur Steuerung- und/oder Regelung einer Drehlage des Verteilgestänge eine zweite Stelleinrichtung vorgesehen ist und wobei die Datenverarbeitungseinrichtung ausgebildet ist, insbesondere Steuerungs- und/oder Regelungssignale, für die erste Stelleinrichtung und/oder die zweite Stelleinrichtung anhand zumindest einem von folgendem zu berechnen:
- Anhand einer Fahrzeuggeometrie der Landmaschine und/oder
- Anhand einer zurückgelegten Wegstrecke, insbesondere pro Zeit, und/oder
- Anhand eines berechneten Geländerelief.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Seitenansicht einer Ausführungsvariante einer Landmaschine, welche entlang einer ebenen Bodenfläche bewegt wird, mit einem in dessen Höhenlage und Drehlage verstellbaren Verteilgestänge,
- Figur 1B: eine Ansicht von hinten einer Ausführungsvariante einer Landmaschine gemäß der Figur 1B,
- Figur 2A: eine Seitenansicht einer Ausführungsvariante einer Landmaschine welche auf einer ebenen Bodenfläche in Richtung einer Steigung bewegt wird,
- Figur 2B: eine Seitenansicht einer Ausführungsvariante einer Landmaschine gemäß der Figur 2A welche entlang einer Steigung in Richtung einer ebenen Bodenfläche bewegt wird,
- Figur 3A: eine Seitenansicht einer Ausführungsvariante einer Landmaschine welche auf einer ebenen Bodenfläche in Richtung einer Senke bewegt wird,
- Figur 3B: eine Seitenansicht einer Ausführungsvariante einer Landmaschine gemäß der Figur 3A, welche mit einer ersten Achse sich in einer Senke befindet und mit einer zweiten Achse sich auf einer ebenen Bodenfläche befindet,
- Figur 3C: eine Seitenansicht einer Ausführungsvariante einer Landmaschine gemäß der Figur 3A und 3B, welche mit einer zweiten Achse sich in einer Senke befindet und mit einer ersten Achse sich auf einer ebenen Bodenfläche befindet,
- Figur 4A: eine schematische Skizze aus der die Orientierungen der X- Y- Z-Achse sowie der Horizontalen und der Erdbeschleunigung hervorgehen, bei einer Landmaschine, welche in Fahrtrichtung entlang einer ebenen Bodenfläche bewegt wird,
- Figur 4B: eine schematische Skizze aus der die Orientierungen der X- Y- Z-Achse sowie der Horizontalen und der Erdbeschleunigung hervorgehen, bei einer Landmaschine welche in Fahrtrichtung zumindest mit einer Achse entlang einer Steigung bewegt wird, wodurch das Chassis einen Neigungswinkel in Fahrtrichtung aufweist,
- Figur 5A: eine schematische Skizze aus der die Orientierungen der X- Y- Z-Achse sowie der Horizontalen und der Erdbeschleunigung hervorgehen, bei einer Landmaschine welche quer zur Fahrtrichtung nicht geneigt ist,
- Figur 5B: eine schematische Skizze aus der die Orientierungen der X- Y- Z-Achse sowie der Horizontalen und der Erdbeschleunigung hervorgehen, bei einer Landmaschine welche quer zur Fahrtrichtung in einem Neigungswinkel geneigt ist,
- Figur 6: ein vereinfachtes Blockschaltbild der Datenverarbeitungseinrichtung.

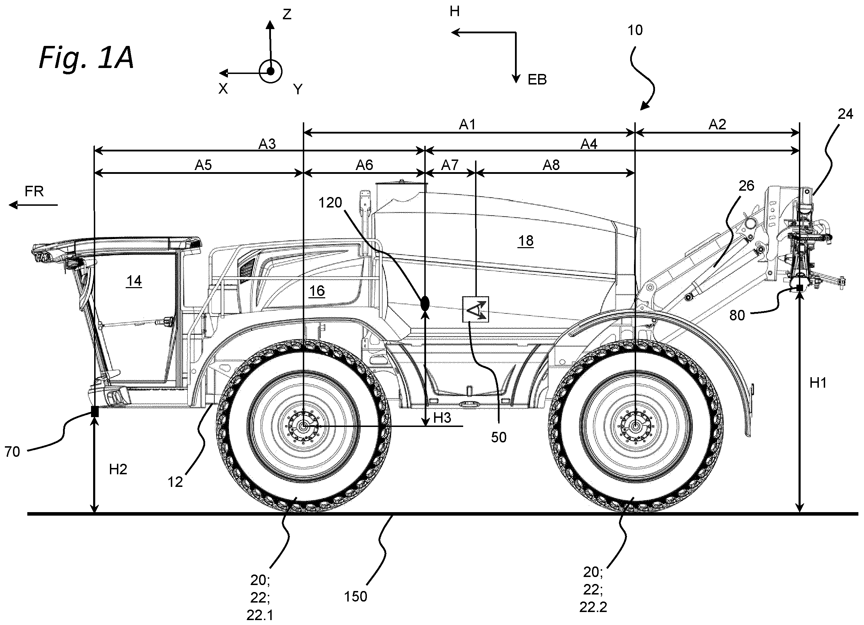

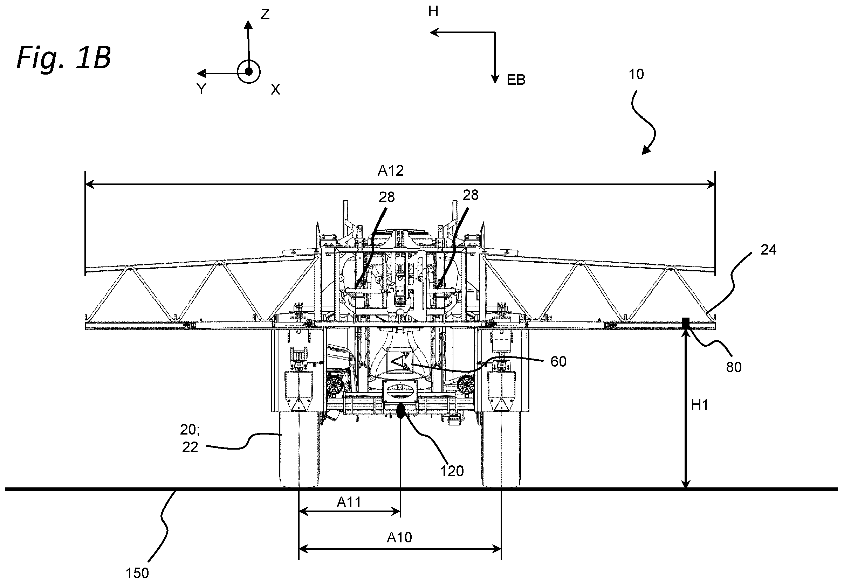

Die in den Figuren 1 bis 6 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Landmaschine und das erfindungsgemäße Verfahren ausgestaltet und ausgeführt sein können und stellen keine abschließende Begrenzung dar.

Eine Ausführungsvariante einer erfindungsgemäßen Landmaschine 10 geht aus der Seitenansicht der Figur 1A sowie aus der Ansicht von hinten gemäß der Figur 1B hervor. Die Landmaschine 10 ist als eine selbstfahrende Landmaschine 10 ausgeführt und umfasst, zum Tragen der Komponenten der Landmaschine 10 ein Chassis 12. Die Landmaschine 10 weist zudem eine Kabine 14 auf, in welcher bspw. ein Bedienstand für eine Bedienperson vorhanden sein kann, zudem umfasst die Landmaschine 10 eine Motoreinheit 16 zum Antreiben dieser 16.

Die Landmaschine 10 ist als selbstfahrende Arbeitsmaschine in Form einer Verteilmaschine, insbesondere in Form einer Feldspritze ausgebildet, um somit insbesondere flüssige Mittel mittels der Landmaschine 10 verteilen zu können. Zum Mitführen und Bereitstellen der jeweiligen zu verteilenden Mittel umfasst die Landmaschine 10 zudem einen Vorratsbehälter 18. Die Kabine 14, die Motoreinheit 16 sowie der Vorratsbehälter 18 werden jeweils von einem Chassis 12 getragen.

Dem Chassis 12 ist darüber hinaus ein Fahrgestell zugeordnet, bzw. umfasst das Chassis 12 ein Fahrgestell. Wobei das Fahrgestell jeweils sich entlang einer Bodenfläche (z.B. Geländerelief 150) abrollende Laufräder 20 umfasst. Die Landmaschine 10 gemäß der Figuren 1A und 1B umfasst zudem eine erste Achse 22 (z.B. Vorderachse 22.1) sowie eine zweite Achse 22 (z.B. Hinterachse 22.2).

Das Fahrgestell gemäß dem Ausführungsbeispiel weist jeweils Radaufhängungen auf, wobei jeweils zwei derartige Radaufhängungen eine Achse 22 ausbilden, wobei hierfür jeder Radaufhängung jeweils ein Laufrad 20 zugeordnet ist.

Die Radaufhängungen, zumindest der Vorderachse 22.1 sind zudem insbesondere lenkbar gegenüber dem Chassis 12.

Die Laufräder 20 sind zudem jeweils Links und Rechts vom Chassis 12 angeordnet.

Zudem sind die Laufräder 20 der Vorderachse 22.1 und/oder 22.2 höhenbeweglich gegenüber dem Chassis 12 angeordnet, insbesondere derartig, dass ein Relativabstand H3 der Laufräder 20 zum Chassis 12 bzw. zu einem Referenzpunkt 120 am Chassis 12 definierbar ist. Wobei durch die Höhenbeweglichkeit zudem ein Chassisabstand H2, des Chassis 12 gegenüber einer Bodenfläche verändert werden kann und ebenso bspw. ein Mindestabstand H1 eines am Chassis 12 angeordneten Verteilgestänge 24 ebenso mit verändert wird bzw. mit verändert werden kann.

Die Laufräder 20 der zwei Achsen 22 sind in einem Achsabstand A1 angeordnet. Zudem weisen die Laufräder 20 einer Achse eine Spurweite A10 auf, sowie zumindest einen elften Abstand A11 zum an der Landmaschine 10 definierten Referenzpunkt 120 auf.

Die Landmaschine 10 wird entlang eines Geländerelief 150 (z.B. Bodenfläche) bewegt, wobei die Kabine 14 entsprechend der Fahrtrichtung FR vorne am Chassis 12 angeordnet ist.

Die Fahrtrichtung FR entspricht gemäß der Figur 1A in Bezug auf eine Kartesisches Koordinatensystem einer Orientierung der X-Achse bzw. X-Richtung. Wobei eine Orientierung quer zur Fahrtrichtung in Bezug auf ein Kartesisches Koordinatensystem einer Orientierung der Y-Achse entspricht (siehe hierzu auch Figur 1B). Dementsprechend weist eine Z-Achse jeweils eine Aufrechte Orientierung auf.

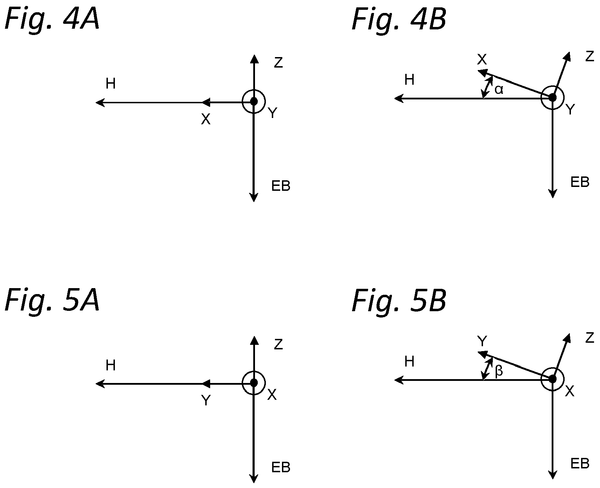

Da die Landmaschine 10 gemäß der Figur 1 auf einer Ebenen bewegt wird, ist eine Horizontale H parallel zur X-Achse sowie eine Orientierung der Erdbeschleunigung EB parallel zur Z-Achse und im rechten Winkel zur X-Achse. Insbesondere heißt dies, dass die Landmaschine 12 mit einer gleichbleibenden Neigung bewegt wird, was wiederum in Fahrtrichtung FR mittels einer, insbesondere zumindest einen Neigungssensor umfassenden, ersten Sensoranordnung 50 ermittelt werden kann und quer zur Fahrtrichtung FR mittels einer, insbesondere zumindest einen Neigungssensor umfassenden, zweiten Sensoranordnung 60 ermittelt werden kann, wobei diese Zusammenhänge ebenso aus der Figur 4A und 5A hervorgehen.

Erfindungsgemäß kann insbesondere vorgesehen sein, dass mittels der ersten Sensoranordnung 50 und/oder mittels der zweiten Sensoranordnung 60 jeweils ein gleichbleibender oder sich verändernder Neigungswinkel (z.B. Neigungswinkel in Fahrtrichtung α und/oder Neigungswinkel quer zur Fahrtrichtung β) des Chassis 12, insbesondere gegenüber einer Referenzebene ermittelt wird, wobei als Referenzebene erfindungsgemäß bspw. eine Horizontale H und/oder eine Orientierung der Erdbeschleunigung EB herangezogen werden kann.

Zur Verteilung von Mittel umfasst die Landmaschine 10 ein Verteilgestänge 24, insbesondere ein Spritzgestänge, welches sich quer zu Fahrtrichtung FR in einer großen Arbeitsbreite bzw. Verteilgestängebreite A12 erstreckt. Das Verteilgestänge 24 respektive Spritzgestänge umfasst insbesondere ein Mittelteil und Links und Rechts am Mittelteil schwenkbar angeordnete Seitenteile. Das Verteilgestänge 24 kann bspw. eine Breite von 20 Meter oder 30 Meter oder mehr aufweisen. Am Verteilgestänge können darüber hinaus Verteilelemente (z.B. Ausbringelemente wie Spritzdüsen, Prallelemente und/oder dergl.) angebracht sein, mittels welchen das Mittel jeweils, insbesondere fächerartig, verteilt wird, wobei die Verteilelemente zudem mit dem Vorratsbehälter wirkverbunden und/oder wirkverbindbar sind.

Das Verteilgestänge 24 ist gegenüber dem Chassis 12 höhenverstellbar und/oder gegenüber dem Chassis 12 in dessen Drehlage verstellbar, wobei zur Steuerung und/oder Regelung Höhenlage eine erste Stelleinrichtung 26 vorgesehen ist und/oder wobei zur Steuerung und/oder Regelung einer Drehlage eine zweite Stelleinrichtung 28 vorgesehen ist.

Die erste Stelleinrichtung 26 ist gemäß der Figur 1 durch einen doppeltwirkenden Aktuator gebildet sowie die zweite Stelleinrichtung 28 durch zwei gegensinnig arbeitende einfachwirkende Aktuatoren. Wobei die Aktuatoren insbesondere pneumatisch und/oder hydraulisch und/oder elektrisch betätigbare und/oder betriebene Aktuatoren sind.

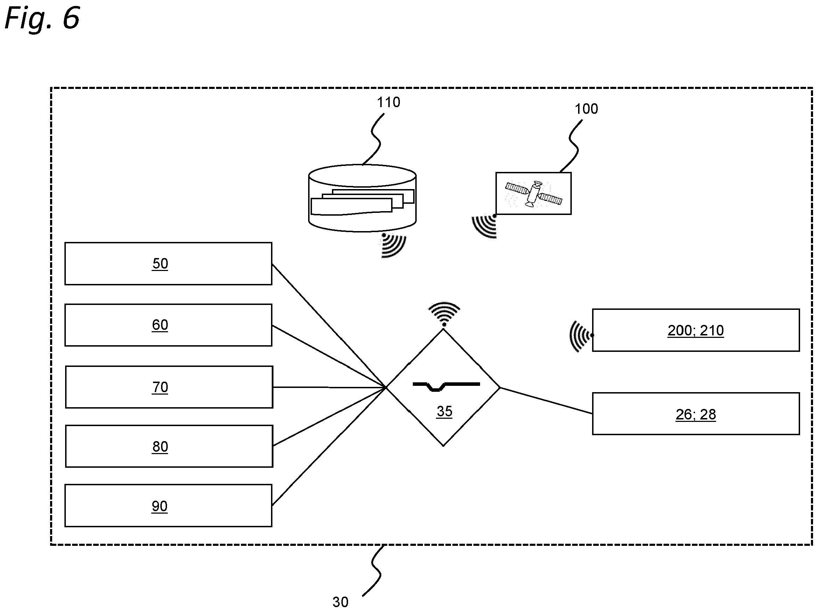

Die Erfindung, zweckmäßig die Landmaschine 10, umfasst eine Datenverarbeitungseinrichtung 30 (siehe Fig. 6) welche ausgebildet ist eine Höhenlage und/oder eine Drehlage des Verteilgestänge 24 gegenüber dem Chassis 12 und/oder gegenüber einer Bodenfläche (z.B. Geländerelief 150) zu berechnen. Wobei dies bspw. anhand einer Fahrzeuggeometrie der Landmaschine 10 und/oder anhand einer zurückgelegten Wegstrecke und/oder anhand eines Berechneten Geländerelief 150 erfolgen kann.

Die Fahrzeuggeometrie kann hierbei bspw. durch verschiedenste Abstände definiert werden, gemäß dem Ausführungsbeispiel der Figur 1 insbesondere nach zumindest einem von folgendem:
- einem Achsabstand A1; und/oder
- einem Zweiten Abstand A2, welcher bspw. zwischen einer Hinterachse 22.2 und dem Verteilgestänge 24 bzw. der vierten Sensoranordnung 80 vorhanden ist, und/oder
- einem Dritten Abstand A3, welcher bspw. zwischen der Positionierung der dritten Sensoranordnung 70 und dem Referenzpunkt 120 vorhanden ist, und/oder
- einem Referenzabstand A4, welcher bspw. zwischen dem Referenzpunkt 120 und der Verteilgestänge 24 bzw. der vierten Sensoranordnung 80 vorhanden ist, und/oder
- einem Fünften Abstand A5, welcher bspw. zwischen der Vorderachse 22.1 und der Positionierung der dritten Sensoranordnung 70 vorhanden ist, und/oder
- einem Sechsten Abstand A6, welcher bspw. zwischen der Vorderachse 22.1 und dem Referenzpunkt 120 vorhanden ist, und/oder
- einem Siebten Abstand A7, welcher bspw. zwischen dem Referenzpunkt 120 und der Position der ersten Sensoranordnung 50 vorhanden ist, und/oder
- einem Achten Abstand A8, welcher bspw. zwischen der Position der ersten Sensoranordnung 50 und der Hinterachse 22.2 vorhanden ist, und/oder
- einer Spurweite A10, und/oder
- einem Elften Abstand A11, welcher bspw. zwischen einem Laufrad 20 und dem Referenzpunkt 120 vorhanden ist, und/oder
- einer Verteilgestängebreite A12.

Wobei die jeweiligen Abstände auch entsprechend aufsummiert werden können oder entsprechend subtrahiert werden können, was insbesondere mittels der Datenverarbeitungseinrichtung 30 durchgeführt werden kann.

Ebenso ist es möglich, dass die Datenverarbeitungseinrichtung 30 ausgebildet ist, Stellsignale (z.B. Steuerungs- und/oder Regelungssignale) für die erste Stelleinrichtung 26 und/oder die zweite Stelleinrichtung 28 zu berechnen, wobei dies anhand einer Fahrzeuggeometrie der Landmaschine 10 und/oder anhand einer zurückgelegten Wegstrecke, insbesondere pro Zeit und/oder anhand eines berechneten Geländerelief 150 erfolgen kann.

Dem Verteilgestänge 24 ist zur Erfassung eines Mindestabstands H1, d.h. zur Erfassung einer Höhenlage des Verteilgestänge 24 gegenüber einer Bodenfläche eine vierte Sensoranordnung 80 zugeordnet.

Um die Berechnung des Geländerelief 150 noch weiter zu präzisieren und um eine proaktive Steuerung noch weiter zu verbessern ist zudem eine dritte Sensoranordnung 70 vorgesehen. Wobei die dritte Sensoranordnung 70 zur Erfassung eines Chassisabstandes H2 zwischen dem Chassis 12 und einer Bodenoberfläche (z.B. Geländerelief 150) ausgebildet ist. Die dritte Sensoranordnung 70 ist zudem dem Chassis, insbesondere den Laufrädern 20 bzw. dessen Fahrspuren, vorgeordnet.

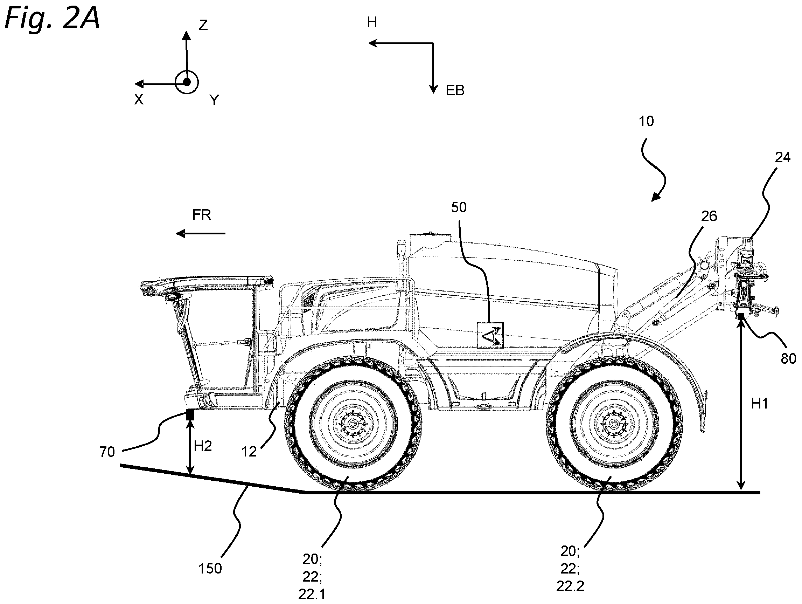

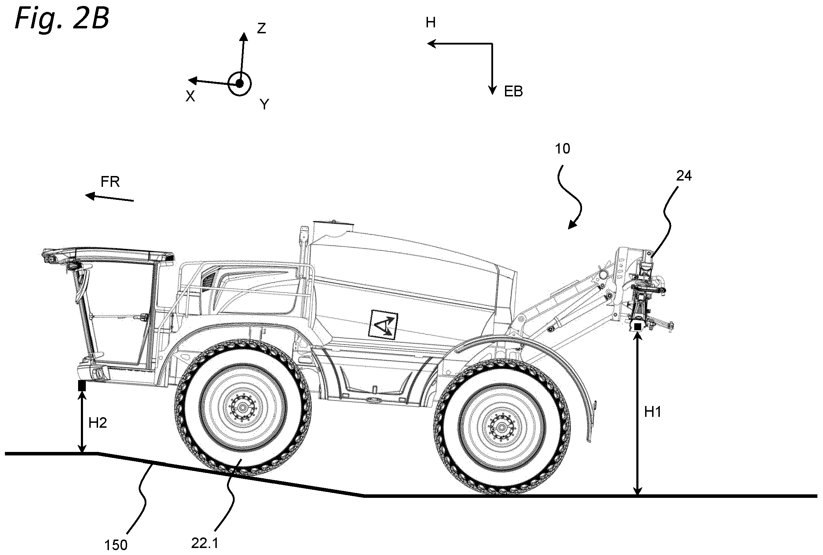

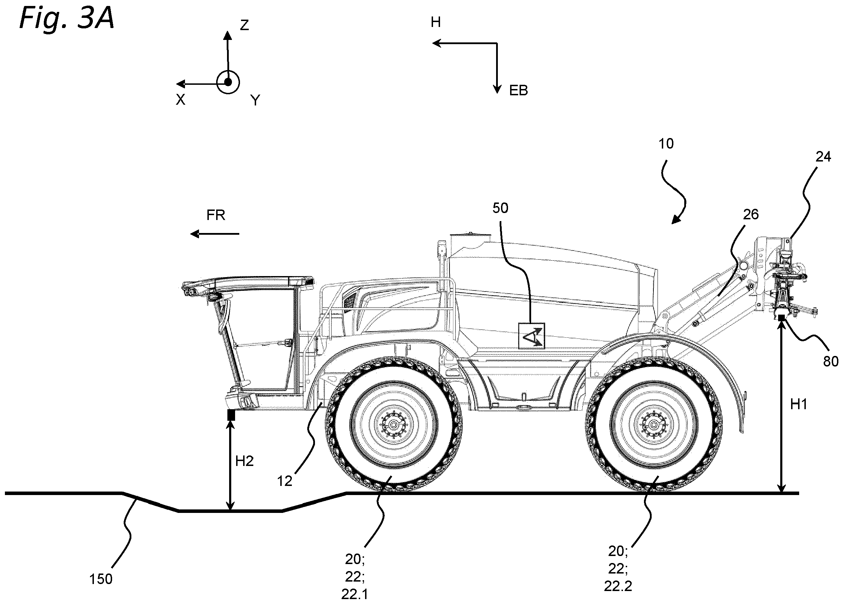

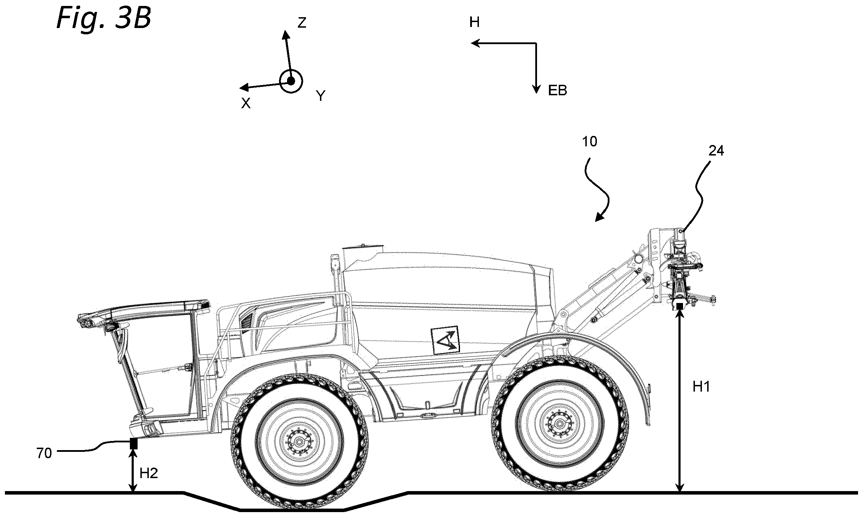

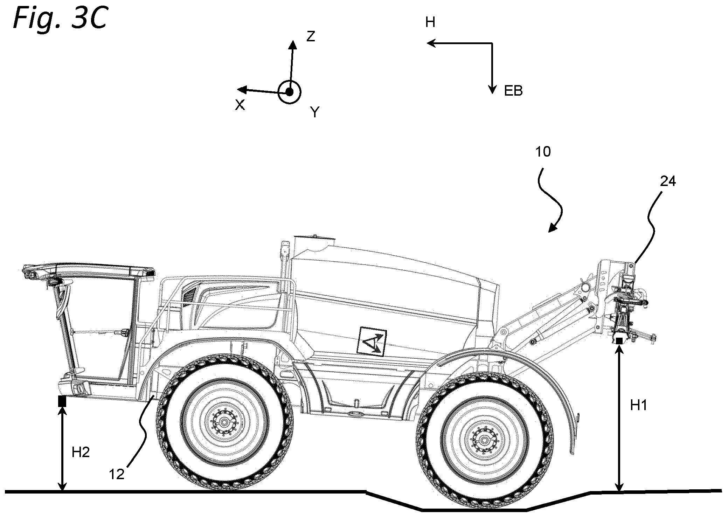

Die Dritte Sensoranordnung 70 ist insbesondere ausgebildet, Bodenunebenheiten vorab zu erfassen, insbesondere Bodenunebenheiten (z.B. Steigungen, Neigungen, Senken, Kuppen) schon zu erfassen, bevor eine Veränderung der Neigung (z.B. in Fahrtrichtung FR und/oder quer zur Fahrtrichtung FR) des Chassis 12 eintritt, (siehe hierzu Figur 2A und 2B sowie 3A, 3B und 3C).

Die Datenverarbeitungseinrichtung 30 ist insbesondere ausgebildet, einen Neigungswinkel in Fahrtrichtung (a) und/oder einen Neigungswinkel quer zur Fahrtrichtung (β) und/oder ein Geländerelief 150 unter Berücksichtigung eines Relativabstand H3 der Laufräder 20 der ersten Achse gegenüber dem Chassis 12 und eines Relativabstand H3 der Laufräder 20 der zweiten Achse gegenüber dem Chassis 12 und/oder unter Berücksichtigung eines Relativabstand H3 der Laufräder 20 Links gegenüber dem Chassis 12 und eines Relativabstand H3 der Laufräder 20 Rechts gegenüber dem Chassis 12, zu berechnen.

Weitere Details gehen aus den Seitenansichten 2A und 2B hervor, welche jeweils eine Ausführungsvariante einer Landmaschine 10 gemäß der Figur 1 umfassen, weshalb auch auf die Beschreibung bzgl. der Figuren 1A und 1B verwiesen wird.

Die Landmaschine 10 wird gemäß Figur 2A zunächst entlang einem ebenen Geländerelief 150 in Richtung zu einer Steigung bewegt und gemäß Figur 2B mit der Vorderachse 22.1 entlang der Steigung bewegt.

Wie aus den Figuren 2A und 2B hervorgeht ändert sich in Abhängigkeit des Geländerelief 150 auch die Neigung des Chassis 12, was gemäß der Figur 2B gegenüber der Figur 2A durch eine entsprechende geänderte Orientierung der X-Achse und der Z-Achse hervorgeht, welche gemäß der Figur 2B zudem in einem Winkel zur Horizontalen H und der Orientierung der Erdbeschleunigung EB aufweisen.

Diese Zusammenhänge gehen zudem aus der Figur 4A und 4B noch detaillierter hervor. Wobei die Zusammenhänge gemäß der Figur 2A der Figur 4B entsprechen und wobei die Zusammenhänge gemäß der Figur 2B der Figur 4B entsprechen. Wie insbesondere aus der Figur 4B hervorgeht weist das Chassis 12 gegenüber der Horizontalen H einen Neigungswinkel in Fahrtrichtung α auf.

In Abhängigkeit einer Fahrt auf einer ebenen Bodenfläche (z.B. Geländerelief 150) oder einer Steigung ändern sich entsprechend auch der Mindestabstand H1 des Verteilgestänge 24 gegenüber dem Geländerelief 150 sowie auch der Chassisabstand H2 gegenüber dem Geländerelief 150, wobei erfindungsgemäß insbesondere vorgesehen sein kann, dass in Abhängigkeit des Geländerelief 150, insbesondere die erste Stelleinrichtung 26 mittels der Datenverarbeitungseinrichtung 30 derartig steuer- und/oder regelbar ist, um zumindest den Mindestabstand H1 des Verteilgestänge 24 gegenüber dem Geländerelief 150 zumindest weitgehend konstant zu halten.

Diese Zusammenhänge gehen darüber hinaus aus den Figuren 3A, 3B und 3C nochmals detaillierten hervor. Wobei hierbei eine Landmaschine 10 gemäß der Figur 1 entlang verschiedenen Geländereliefs 150 bewegt wird, weshalb auch auf die Beschreibung bzgl. der Figuren 1A und 1B verwiesen wird. Das Chassis 12 weist entsprechend jeweils verschiedene Neigungen auf, wodurch wiederum sich der Mindestabstand H1 und der Chassisabstand H2 sich jeweils ändern, jedoch mittels der Datenverarbeitungseinrichtung 30 insbesondere die zweite Stelleinrichtung 26 jeweils derartig steuer- und/oder regelbar ist um einen Mindestabstand H1 zumindest weitgehend konstant zu halten.

Weitere Zusammenhänge einer gleichbleibenden Neigung eines Chassis 12 in Fahrtrichtung FR gehen aus der Figur 4A sowie einer sich verändernden Neigung eines Chassis in Fahrtrichtung gehen aus der Figur 4B hervor. So weist gemäß der Figur 4A die X-Achse und demnach das Chassis eine identische Orientierung zu einer Horizontalen H auf bzw. die Z-Ache eine identische Orientierung zur Orientierung der Erdbeschleunigung EB auf. Dem gegenüber weist gemäß der Figur 4B die X-Achse und somit das Chassis 12 ein Neigungswinkel in Fahrtrichtung α gegenüber der Horizontalen H auf.

Weitere Zusammenhänge einer gleichbleibenden Neigung eines Chassis 12 quer zur Fahrtrichtung FR gehen aus der Figur 5A sowie einer sich verändernden Neigung eines Chassis quer zur Fahrtrichtung gehen aus der Figur 5B hervor. So weist gemäß der Figur 5A die Y-Achse und demnach das Chassis eine identische Orientierung zu einer Horizontalen H auf bzw. die Z-Ache eine identische Orientierung zur Orientierung der Erdbeschleunigung EB auf, sowie die Y-Achse eine senkrechte Ausrichtung (z.B. rechter Winkel) zur Orientierung der Erdbeschleunigung EB. Dem gegenüber weist gemäß der Figur 5B die Y-Achse und somit das Chassis ein Neigungswinkel quer zur Fahrtrichtung β gegenüber der Horizontalen H auf.

Weitere Details einer Ausführungsvariante einer Datenverarbeitungseinrichtung 30 gemäß der vorliegenden Erfindung gehen aus dem Blockschaltbild der Figur 6 hervor. Wie aus der Figur 6 hervorgeht, umfasst die Datenverarbeitungseinrichtung 30 insbesondere die Gesamtheit der Bauteile zur Signal- und/oder Befehlsübertragung. Dementsprechend auch zumindest eine Rechnereinheit 35.

Die Datenverarbeitungseinrichtung 30 ist zumindest mit der ersten Sensoranordnung 50, mit der zweiten Sensoranordnung 60, der dritten Sensoranordnung 70, der vierten Sensoranordnung 80, sowie mit der Erfassungseinrichtung 90 signalverbunden und/oder signalverbindbar (z.B. drahtlos und/oder drahtgebunden). Es wären darüber hinaus jedoch noch weitere Elemente zur Signalübertragung denkbar.

Darüber hinaus kann die Datenverarbeitungseinrichtung 30 bzw. die Rechnereinheit 35 mit einem Positionsbestimmungssystem 100 und/oder mit einer Datenbank 110 in Datenverbindung stehen um somit bspw. ein Geländerelief 150 an die Datenbank 110 zu übertragen und/oder um Daten zur Berechnung des Geländerelief 150 aus der Datenbank 110 zu empfangen. Des Weiteren kann ein Positionsbestimmungssystem 100 (z.B. GPS-System) vorgesehen sein um somit bspw. eine Fahrgeschwindigkeit zu ermitteln und/oder eine zurückgelegte Wegstrecke pro Zeit zu ermitteln. Das Positionsbestimmungssystem 100 könnte dementsprechend auch die Erfassungseinrichtung 90 bilden.

Die Datenverarbeitungseinrichtung 30 kann zudem ausgebildet sein, die Daten der ersten Sensoranordnung 50 und/oder der zweiten Sensoranordnung 60 und/oder der dritten Sensoranordnung 70 und/oder der vierten Sensoranordnung 80 zu fusionieren und daraus ein Geländerelief 150 erzeugen, bzw. zu berechnen.

Es ist möglich, dass das jeweils berechnete Geländerelief 150 an ein Planungssystem 200, zur Planung landwirtschaftlicher Prozesse übertragen wird und bspw. zur Planung landwirtschaftlicher Prozesse eingesetzt werden kann. Auch ist es denkbar, dass das Geländerelief 150 an eine andere Landmaschine übertragen wird und/oder in einem Rechnerprogramm einer anderen Landmaschine hinterlegt wird. Ebenso denkbar ist es, dass das Geländerelief an eine Anzeigevorrichtung 210 übertragen (z.B. drahtlos und/oder drahtgebunden) wird.

Die Datenverarbeitungseinrichtung 30 umfasst zudem bzw. ist mit der ersten Stelleinrichtung 26 und/oder mit der zweiten Stelleinrichtung 28 signalverbunden und/oder signalverbindbar.

Die Erfassungseinrichtung 90 dient zur Erfassung einer Fahrgeschwindigkeit und/oder einer zurückgelegten Wegstrecke, insbesondere pro Zeit.

Erfindungsgemäß ist die Datenverarbeitungseinrichtung 30 ausgebildet, anhand einer Fahrgeschwindigkeit eine zurückgelegte Wegstrecke, insbesondere pro Zeit, zu berechnen und/oder anhand einer zurückgelegten Wegstrecke, insbesondere pro Zeit und anhand eines, sich insbesondere entlang der Wegstrecke verändernden oder gleichbleibenden, Neigungswinkel des Chassis 12 ein Geländerelief 150 zu berechnen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: Landmaschine
- 12: Chassis
- 14: Kabine
- 16: Motoreinheit
- 18: Vorratsbehälters
- 20: Laufrad
- 22: Achse
- 22.1: Vorderachse
- 22.2: Hinterachse
- 24: Verteilgestänge
- 26: Erste Stelleinrichtung
- 28: Zweite Stelleinrichtung
- 30: Datenverarbeitungseinrichtung
- 35: Rechnereinheit
- 50: Erste Sensoranordnung
- 60: Zweite Sensoranordnung
- 70: Dritte Sensoranordnung
- 80: Vierte Sensoranordnung
- 90: Erfassungseinrichtung
- 100: Positionsbestimmungssystem
- 110: Datenbank
- 120: Referenzpunkt
- 150: Geländerelief
- 200: Planungssystem
- 210: Anzeigevorrichtung
- FR: Fahrtrichtung
- H: Horizontale
- EB: Orientierung Erdbeschleunigung
- H1: Mindestabstand
- H2: Chassisabstand
- H3: Relativabstand
- A1: Achsabstand
- A2: Zweiter Abstand
- A3: Dritter Abstand
- A4: Referenzabstand
- A5: Fünfter Abstand
- A6: Sechster Abstand
- A7: Siebter Abstand
- A8: Achter Abstand
- A10: Spurweite
- A11: Elfter Abstand
- A12: Verteilgestängebreite
- X: X-Achse
- Y: Y-Achse
- Z: Z-Achse
- α: Neigungswinkel in Fahrtrichtung
- β: Neigungswinkel quer zur Fahrtrichtung

## Patentansprüche

1. Landmaschine (10), insbesondere selbstfahrende und/oder gezogene Landmaschine (10), zumindest aufweisend,
- ein, Komponenten der Landmaschine (10) tragendes Chassis (12),
- eine Datenverarbeitungseinrichtung (30),
- eine Sensoreinheit, zur Erfassung eines Neigungswinkels des Chassis (12), insbesondere gegenüber einer Referenzebene,
eine Erfassungseinrichtung (90), zur Erfassung einer Fahrgeschwindigkeit und/oder einer zurückgelegten Wegstrecke, insbesondere pro Zeit,
wobei die Datenverarbeitungseinrichtung (30) ausgebildet ist, anhand einer Fahrgeschwindigkeit eine zurückgelegte Wegstrecke, insbesondere pro Zeit, zu berechnen und/oder anhand einer zurückgelegten Wegstrecke, insbesondere pro Zeit und anhand eines, sich insbesondere entlang der Wegstrecke verändernden oder gleichbleibenden, Neigungswinkel des Chassis (12) ein Geländerelief (150) zu berechnen.

2. Landmaschine (10), nach Anspruch 1, wobei die Sensoreinheit eine erste Sensoranordnung (50) zur Erfassung eines Neigungswinkels in Fahrtrichtung (a), insbesondere gegenüber der Referenzebene, aufweist.

3. Landmaschine (10), nach Anspruch 1 oder 2, wobei die Sensoreinheit eine zweite Sensoranordnung (60) zur Erfassung eines Neigungswinkels quer zur Fahrtrichtung (β), insbesondere gegenüber der Referenzebene, aufweist.

4. Landmaschine (10), nach einem der vorhergehenden Ansprüche, wobei die Referenzebene zumindest eine Orientierung aufweist welche zumindest einem von folgenden entspricht:
- einer Horizontalen (H) und/oder einem künstlichen Horizont und/oder
- einer Orientierung der Erdbeschleunigung (EB) und/oder
- einer zumindest weitgehend parallelen zur Horizontalen (H) und/oder
- einer zumindest weitgehend parallelen zur Orientierung der Erdbeschleunigung (EB).

5. Landmaschine (10), nach einem der vorhergehenden Ansprüche, wobei die erste Sensoranordnung (50) und/oder die zweite Sensoranordnung (60) zur Bestimmung eines Neigungswinkels des Chassis (12), insbesondere gegenüber der Referenzebene, zumindest einen Neigungswinkelsensor umfasst, insbesondere einen Beschleunigungskompensierten Neigungswinkelsensor, umfasst.

6. Landmaschine (10), nach einem der vorhergehenden Ansprüche, wobei die erste Sensoranordnung (50) und/oder die zweite Sensoranordnung (60) zumindest einen Drehratensensor und/oder einen Beschleunigungssensor, insbesondere zur Erfassung einer Drehgeschwindigkeit und/oder einer Drehbeschleunigung des Chassis (12), insbesondere gegenüber der Referenzebene, umfasst.

7. Landmaschine (10), nach Anspruch 6, wobei die Datenverarbeitungseinrichtung (30) ausgebildet ist, durch zeitliche Integration der Drehgeschwindigkeit und/oder durch zeitliche Integration der Drehbeschleunigung einen Neigungswinkel des Chassis (12), insbesondere gegenüber der Referenzebene zu bestimmen, insbesondere zu berechnen.

8. Landmaschine (10), nach einem der vorhergehenden Ansprüche, wobei diese mindestens eine Achse (22) aufweist, insbesondere eine erste Achse und/oder eine zweite Achse aufweist, wobei die erste Achse und/oder die zweite Achse jeweils zumindest zwei Laufräder (20) aufweisen, wobei jeweils zumindest ein Laufrad (20) Links und zumindest ein Laufrad (20) Rechts vom Chassis (12) angeordnet sind und wobei zumindest die Laufräder (20) der ersten Achse und/oder der zweiten Achse, insbesondere zur Definition eines Relativabstand (H3), höhenbeweglich gegenüber dem Chassis (12) sind.

9. Landmaschine (10), nach Anspruch 8, wobei die Datenverarbeitungseinrichtung (30) ausgebildet ist, einen Neigungswinkel in Fahrtrichtung (a) und/oder einen Neigungswinkel quer zur Fahrtrichtung (β) und/oder ein Geländerelief (150),
unter Berücksichtigung eines Relativabstand (H3) der Laufräder (20) der ersten Achse gegenüber dem Chassis (12) und eines Relativabstand (H3) der Laufräder (20) der zweiten Achse gegenüber dem Chassis (12) und/oder
unter Berücksichtigung eines Relativabstand (H3) der Laufräder (20) Links gegenüber dem Chassis (12) und eines Relativabstand (H3) der Laufräder (20) Rechts gegenüber dem Chassis (12), zu berechnen.

10. Landmaschine (10), nach einem der vorhergehenden Ansprüche, wobei diese
eine landwirtschaftliche Zugmaschine und/oder
eine selbstfahrende Arbeitsmaschine oder eine gezogene Arbeitsmaschine ist,
und wobei die Arbeitsmaschine ein gegenüber dem Chassis (12) höhenverstellbares und/oder gegenüber dem Chassis (12) in dessen Drehlage verstellbares Verteilgestänge (24), insbesondere Spritzgestänge, zur vorzugsweisen Ausbildung einer Feldspritze oder eines Düngerstreuers, aufweist.

11. Landmaschine (10), nach einem der vorhergehenden Ansprüche, wobei diese ein gegenüber dem Chassis (12) höhenverstellbares und/oder gegenüber dem Chassis (12) in dessen Drehlage verstellbares Verteilgestänge (24) aufweist, wobei zur Steuerung und/oder Regelung einer Höhenlage eine erste Stelleinrichtung (26) vorgesehen ist und/oder wobei zur Steuerung und/oder Regelung einer Drehlage eine zweite Stelleinrichtung (28) vorgesehen ist.

12. Landmaschine (10), nach Anspruch 11, wobei die erste Stelleinrichtung (26) und/oder die zweite Stelleinrichtung (28) durch einen und/oder mehrere pneumatisch und/oder hydraulisch und/oder elektrisch betätigbare und/oder betriebene Aktuatoren gebildet werden, insbesondere durch einen oder mehrere einfachwirkende und/oder durch zwei gegensinnige arbeitende einfachwirkende und/oder einen oder mehrere doppeltwirkenden Zylinder gebildet werden.

13. Landmaschine (10), nach einem der vorhergehenden Ansprüche, wobei die Datenverarbeitungseinrichtung (30) ausgebildet ist, eine Höhenlage und/oder eine Drehlage des Verteilgestänge (24) gegenüber dem Chassis (12) und/oder gegenüber einer Bodenfläche anhand von zumindest einem von folgendem zu berechnen:
- Anhand einer Fahrzeuggeometrie der Landmaschine (10) und/oder
- Anhand einer zurückgelegten Wegstrecke, insbesondere pro Zeit und/oder
- Anhand eines Berechneten Geländerelief (150).

14. Landmaschine (10), nach einem der vorhergehenden Ansprüche, wobei die Datenverarbeitungseinrichtung (30) ausgebildet ist, Stellsignale, insbesondere Steuerungs- und/oder Regelungssignale, für die erste Stelleinrichtung (26) und/oder die zweite Stelleinrichtung (28) anhand zumindest einem von folgendem zu berechnen:
- Anhand einer Fahrzeuggeometrie der Landmaschine (10) und/oder
- Anhand einer zurückgelegten Wegstrecke, insbesondere pro Zeit und/oder
- Anhand eines berechneten Geländerelief (150).

15. Landmaschine (10), nach einem der vorhergehenden Ansprüche, wobei die Fahrzeuggeometrie durch
- eine Spurweite (A10) und/oder
- einen Achsabstand (A1) und/oder
- einen Referenzabstand (A4) des Verteilgestänge (24) zu einem Referenzpunkt (120) am Chassis (12) und/oder
- eine Verteilgestängebreite (A12) des Verteilgestänges (24)
definiert wird.

16. Landmaschine (10), nach einem der vorhergehenden Ansprüche, wobei die Datenverarbeitungseinrichtung (30) ausgebildet ist, Anhand eines, auf Basis des Geländerelief (150) berechneten, Mindestabstands (H1) des Verteilgestänge (24) gegenüber der Bodenfläche, Stellsignale für die erste Stelleinrichtung (26) und/oder die zweite Stelleinrichtung (28) zu generieren.

17. Landmaschine (10), nach einem der vorhergehenden Ansprüche, wobei diese eine dritte Sensoranordnung (70) zur Erfassung eines Chassisabstandes (H2), welcher zwischen dem Chassis (12) und einer Bodenfläche vorhanden ist, aufweist, wobei die dritte Sensoranordnung (70) dem Chassis (12) insbesondere vorgeordnet ist.

18. Landmaschine (10), nach einem der vorhergehenden Ansprüche, wobei die Erfassungseinrichtung (90) ausgebildet ist, eine konstante Fahrgeschwindigkeit, eine Beschleunigung und/oder eine Verzögerung der Landmaschine (10) zu Erfassen und wobei die Datenverarbeitungseinrichtung (30) ausgebildet ist, anhand einer konstanten Geschwindigkeit, einer Beschleunigung und/oder einer Verzögerung eine zurückgelegte Wegstrecke, insbesondere pro Zeit, zu berechnen.

19. Verfahren zum Betreiben einer Landmaschine (10), insbesondere für eine selbstfahrende und/oder gezogene Landmaschine (10), umfassend,
ein Berechnen eines Geländerelief (150) mittels einer Datenverarbeitungseinrichtung (30), Anhand eines mittels einer Sensoreinheit erfassten, sich entlang einer Wegstecke verändernden oder gleichleiben Neigungswinkels eines Chassis (12) der Landmaschine (10), insbesondere gegenüber einer Referenzebene und Anhand einer zurückgelegten Wegstrecke, insbesondere pro Zeit.

20. Verfahren nach Anspruch 19, wobei die Landmaschine (10) ein gegenüber dem Chassis (12) in dessen Höhenlage und/oder in dessen Drehlage verstellbares Verteilgestänge (24) aufweist, wobei zur Steuerung- und/oder Regelung einer Höhenlage des Verteilgestänge (24) eine erste Stelleinrichtung (26) vorgesehen ist und/oder wobei zur Steuerung- und/oder Regelung einer Drehlage des Verteilgestänge (24) eine zweite Stelleinrichtung (28) vorgesehen ist und wobei die Datenverarbeitungseinrichtung (30) ausgebildet ist, insbesondere Steuerungs- und/oder Regelungssignale, für die erste Stelleinrichtung (26) und/oder die zweite Stelleinrichtung (28) anhand zumindest einem von folgendem zu berechnen:
- Anhand einer Fahrzeuggeometrie der Landmaschine (10) und/oder
- Anhand einer zurückgelegten Wegstrecke, insbesondere pro Zeit und/oder
- Anhand eines berechneten Geländerelief (150).
